# EUROPEAN PATENT SPECIFICATION

(11) **EP 1 722 661 B1**
(45) Date of publication and mention of the grant of the patent: **02.01.2008**
(21) Application number: 04720133.0
(22) Date of filing: 12.03.2004
(51) Int. Cl.: A47J 27/62

(54) **A DEVICE FOR HEATING LIQUIDS, IN PARTICULAR MILK**
VORRICHTUNG ZUM ERWÄRMEN VON FLÜSSIGKEITEN, INSBESONDERE MILCH
DISPOSITIF DESTINÉ À CHAUFFER LES LIQUIDES, NOTAMMENT LE LAIT

(43) Date of publication of application: 22.11.2006
(73) Proprietor: BIALETTI INDUSTRIE S.P.A., 25030 Coccaglio (Brescia) (IT)
(72) Inventor: RANZONI, Francesco, c/o Bialetti Industrie S.p.A., I-25030 Coccaglio (Brescia) (IT)
(74) Representative: Leihkauf, Steffen Falk
(86) International application number: PCT/IT2004/000121
(87) International publication number: WO 2005/087065

(56) References cited:
- DE-A- 4 312 683
- DE-A- 4 418 546
- FR-A- 2 501 490

## Description

A device for heating liquids, particularly milk, forms the subject of the present invention.

Devices for heating liquids are known comprising an electrical resistance with more or less constant resistivity, generally placed at the bottom of a container. Such devices have some important drawbacks, above all when used for heating milk or other similar liquids. Indeed, it is known that milk tends to adhere to the bottom and to the walls of the container, and to burn in the case of overheating. That involves a difficult cleaning operation for the used container.

Furthermore, with overheating, the milk tends to increase in volume and to overflow out of the container.

DE-A-4312683 discloses a device for heating liquids according to the preamble of independent claim 1.

The problem at the heart of the present invention is that of proposing a device for heating liquids, particularly milk, which has such structural and functional characteristics as to overcome the aforesaid drawbacks cited in reference to the prior art.

Such problem is resolved by a device for heating liquids, particularly milk, in accordance with claim 1. The dependent claims refer to further embodiments of the heating device according to the present invention.

Further characteristics and the advantages of the device for heating liquids according to the invention will emerge from the following description of the preferred embodiments thereof, given as non-limiting indication, with reference to the attached figures, wherein:

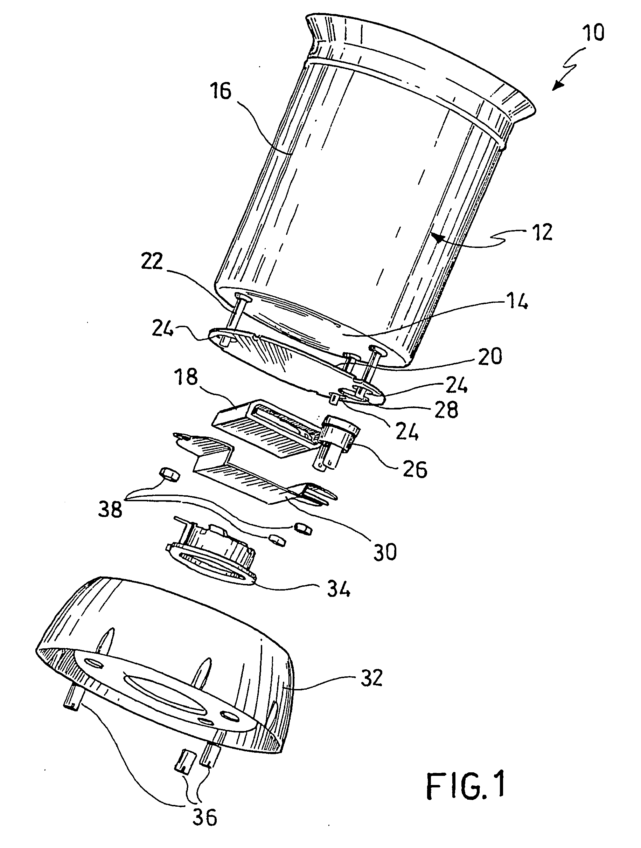

figure 1 illustrates a perspective and exploded view of a heating device according to the present invention comprising a heating element;

figure 2 illustrates a graph of the power supplied by the heating element as a function of the heating time and in relation to the temperature;

figure 3 illustrates an explanatory diagram of the percentage of foam in the milk, obtained manually by emulsifying, as a function of the temperature reached by the milk itself;

figure 4 illustrates an explanatory diagram of the percentage of foam in the milk, obtained manually by emulsifying, as a function of the temperature reached by the milk itself, after three minutes from the emulsion stage.

With reference to the above mentioned figures, with 10 has been generally indicated a device for heating liquids, particularly milk.

The heating device 10 comprises a container 12 suitable to receive the liquid to be heated. According to one possible embodiment, the container 12 has a cylindrical conformation. In accordance with one advantageous embodiment, the container 12 is made of 18/10 stainless steel, for example by drawing.

With reference to the enclosed drawings, with 14 has been indicated a bottom of the container 12, whilst with 16 have been indicated the side walls of the container 12.

The container 12 is operatively associated with heating means, comprising a heating element 18 suitable for providing power which is variable over time, and hence as a function of the temperature reached by the liquid. The heating element 18 is suitable for reducing the power delivered over time and hence with the increasing temperature of the liquid.

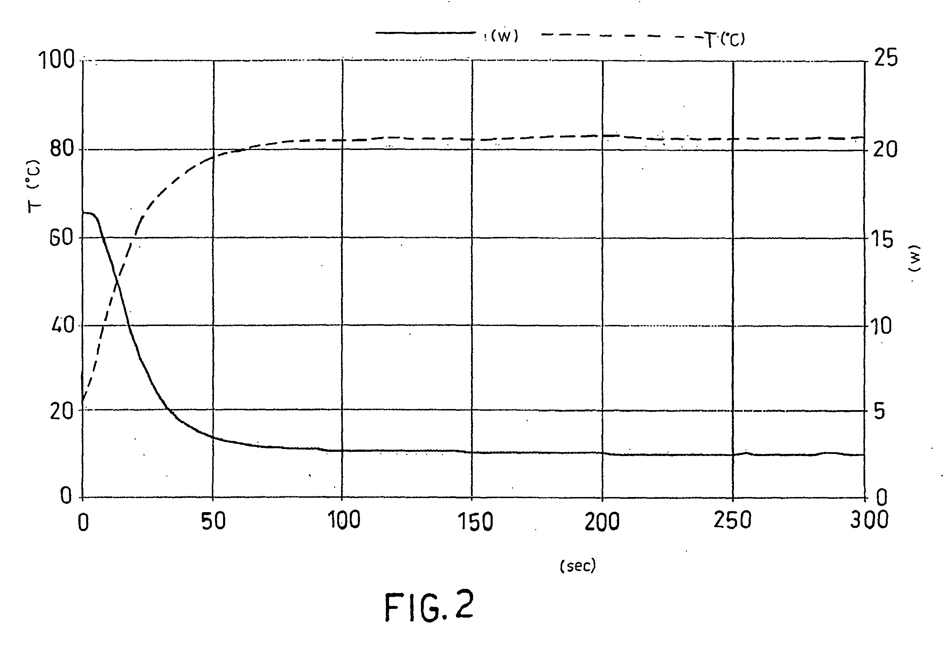

The heating element 18 or PTC (Positive Temperature Coefficient) heating element, is suitable for providing variable power over time as a function of the temperature reached by the milk, as in the enclosed graph (figure 2).

The heating element 18 is positioned in such a way as to heat the bottom 14 of the container 12, for example from the outside of the container itself.

A thermal diffuser 20 is further provided, fitted between the heating element 18 and the container 12 in order to distribute the heat generated by the heating element. Particularly, in the case wherein the heating element 18 is positioned at the bottom 14 of the container, the thermal diffuser 20 is advantageously fitted between the heating element and the bottom 14 of the container itself, in order to distribute the heat generated by the heating element over the entire bottom surface.

According to one possible embodiment, the thermal diffuser 20 is made in the shape of a small plate or disk, placed in contact with the bottom 14 of the container 12. Preferably, the thermal diffuser 20 is made of aluminium.

Advantageously, it is provided that the contact between the thermal diffuser 20 and the bottom 14 of the container is mediated through a layer of conductive paste, for example produced by Dow Corning, capable of improving the thermal conductivity. Analogously, the contact between the heating element 18 and the thermal diffuser 20 may also be mediated by a layer of conductive paste. Advantageously, any loss of contact between the surface of the heating element 18 and the surface of the thermal diffuser 20, and between the surface of the thermal diffuser 20 and the bottom 14 of the container is thus reduced.

In the case wherein connecting rods 22 are provided extending externally from the bottom 14 of the container 12, the thermal diffuser 20 may be provided with through holes 24 adapted to receiving the aforesaid rods.

The heating device 10 further comprises a thermal sensor 26 operatively connected with the heating element 18 in order to disconnect it upon reaching a pre-determined temperature. Particularly, the thermal sensor 26 is adapted to detecting the temperature at the bottom 14 of the container 12.

According to the invention the thermal diffuser has an aperture 28 in order to receive the thermal sensor 26 and allow that the latter directly contacts the container 12.

These three elements, the heating element 18, and the thermal diffuser 20, and the thermal sensor 26 may be mounted bundled together against the bottom 14 of the container 12, preferably on the outer surface of the same. In this case, an arm 30 may be advantageously provided for fixing the heating element 18, the thermal diffuser 20 and the thermal sensor 26 to the bottom 14 of the container 12, for example through the connecting rods 22.

According to one possible embodiment, the heating device 10 may advantageously comprise a closing element 32 suitable for housing the heating element 18. Particularly, the closing element 32 may be adapted to being externally mounted to the bottom 14 of the container 12.

According to one possible embodiment, the closing element 32 is adapted to maintaining the container 12 in the upright position. For example, the closing element 32 performs the function of a stand with dimensions slightly larger than those of the container 12, and is adapted to being rested on an electrical base for supplying the heating element.

According to one possible embodiment, the closing element 32 is adapted to housing an electrical connecter 34 for supplying the heating element. Particularly, the closing element 32 may be suitable for housing the thermal diffuser 20, and the thermal sensor 26, and the heating element 18, and the electrical connecter 34 advantageously fitted between the closing element itself and the bottom 14 of the container 12.

The closing element 32 may be advantageously fixed to the bottom 14 of the container 12, for example by using shaped nuts 36 adapted to being tightened onto the connecting rods 22.

According to one embodiment of the heating device 10, the latter comprises a piston with perforated surfaces, adapted to be fitted into the container 12 in order to emulsify the liquid, particularly the milk, with air and create a foam suitable for making hot beverages such as for example so-called cappuccino.

Below is described the assembly of a heating device in accordance with one of the possible above illustrated embodiments, for example corresponding to that illustrated in the enclosed drawings.

The thermal diffuser 20 is fitted over the connecting rods 22. The thermal sensor 26 is fitted into the aperture 28 and the heating element 18 is placed in close contact with the thermal diffuser 20. The arm 30 is fitted over the connecting rods 22 so as to lock bundled together the thermal diffuser 20, the thermal sensor 26 and the heating element 18, for example by using locking nuts 38. The conductive paste is previously spread between the bottom of the container and the thermal diffuser, and between the latter and the heating element.

Finally, the closing element 32, which holds the electrical connecter 34 inside, is fitted over the bottom 14 of the container 12 and locked onto the connecting rods 22 using shaped nuts 36.

An electrical base for the supply, not shown, suitable for receiving the closing element 32 is provided in order to complete the device.

Below is described the operation of the above described heating device.

The liquid inside the container 12 is heated by activating the heating element 18, for example by using a switch, not shown, or by placing the container on the relevant electrical supply base.

Power is distributed by the heating element 18 in a variable manner over time, for example according to the enclosed graph (figure 2), whereby, with the increase in temperature, particularly the temperature of the milk, the power distributed by the heating element diminishes. The heating element is thus able to auto-regulate itself.

The graph in figure 2 shows with the continuous line, the power (W) distributed by the heating element, and with the dotted line, the temperature (°C) assimilable with the temperature reached by the liquid in the container. On the X axis is indicated the elapsed heating time (seconds) from 0 to 300. On the Y axes to the left are reported the temperature values (°C) from 0 to 100 with reference to the dotted line of the graph. On the Y axes to the right are reported the power values (W) from 0 to 25 with reference to the continuous line on the graph.

When the desired temperature of the liquid is finally reached, the thermal sensor 26 (or thermostat) disconnects the heating element.

In other words, the heating element 18 is of such a type that the power provided by it is modulated as a function of the temperature reached by the milk within the container, so that, coinciding with the heating of the milk, there is a progressive reduction of the thermal energy provided, thus avoiding the overheating of the bottom which would otherwise bring about the burning of the milk.

In the case where the heating device 10 foresees the use of the piston, subsequent to the heating stage of the liquid, at a defined temperature, the piston is lowered and raised within the container in order to emulsify the air and liquid. In the case where the heated liquid is milk, the mechanical action of the piston emulsifies the air with the milk producing foam, suitable for example for being added to coffee in order to obtain so-called cappuccino.

From the above it can be appreciated how providing a heating device according to the present invention allows the heating of liquids, particularly milk, avoiding the conventional drawbacks of burning on the walls of the container and/or the overflow of the liquid from the container whilst also allowing the accomplishment of the heating stage within a time considered reasonable for domestic use. Particularly, the overheating of the milk on the bottom of the container is avoided, thus as a result avoiding that residues of burnt or overheated milk become attached to the bottom, thus proving difficult to remove.

Conventional heating elements such as electrical resistances with more or less constant resistivity have been shown to be inappropriate for the purpose in that in order to avoid burning the liquid, particularly the milk, on the bottom of the container, it is necessary to reduce the specific power (W/cm²) to such levels as to excessively prolong the time necessary for reaching the pre-determined temperature, above all when the container is used at the maximum workable volume.

Furthermore, the provision of a heating element which distributes variable power over time as a function of the temperature and which is disconnected upon reaching a defined temperature, allows the attainment of maximum results in the case where it is desired to heat an amount of milk in order to create foam through mechanical action, in that it allows a defined temperature to be rapidly and precisely reached, with limited variation from the optimal value.

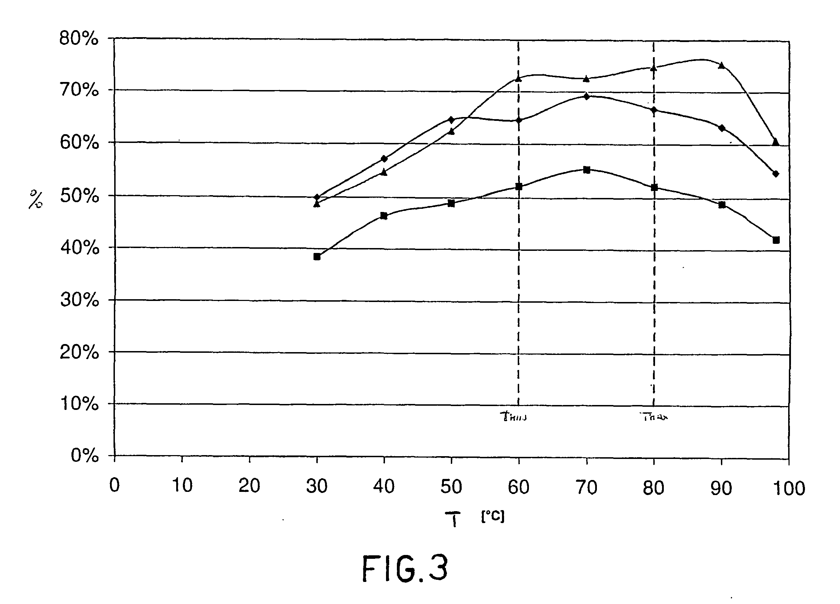

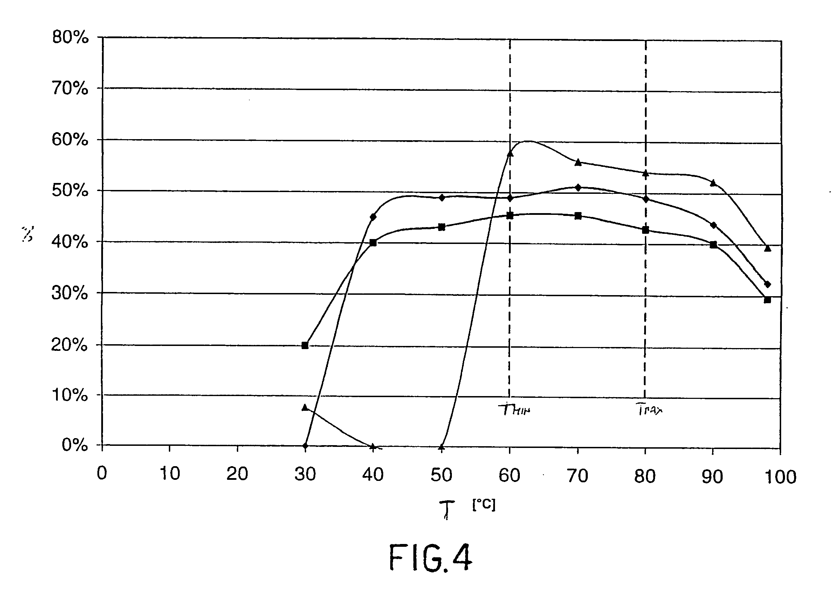

Indeed, it has been unusually observed that the emulsion between air and milk acquires the best consistency and persistence if the mechanical action carried out through the piston is carried out when the milk is at an optimal temperature of 70°C (+/- 10°C). The enclosed graph in figure 3 indicates, as a function of the temperature of the milk and the type of milk, the percentage of foam obtained at the end of the mechanical milk/air emulsifying operation. The graph enclosed in figure 4 indicates, as a function of the temperature of the milk and the type of milk, the permanence of the previously obtained foam, or rather the percentage of foam present three minutes after formation. In both graphs, the line marked with small squares indicates the results obtained with semi-skimmed milk, that marked by triangles indicates the results obtained with skimmed milk whilst that marked with rhombuses indicates the results obtained with whole milk. The two dotted lines indicate respectively the minimum temperature and the maximum temperature for an optimal emulsifying stage. The optimal emulsion interval is therefore comprised of between 60°C and 80°C. The graphs report the milk temperature (°C) on the X axis and on the Y axis the percentage (%) of foam, calculated according to the following method.

At the end of the emulsifying stage, the emulsified milk is poured into a graduated cylinder and the total height H of the milk/foam together and the height h of the foam by itself are measured. The ratio (h/H)*100 provides the value indicated on the Y axis of the graph of figure 3. The measurement is repeated three minutes after emulsifying and provides the value indicated on the Y axis of the graph of figure 4. In other words the ratio (h/H)*100 provides the value indicated on the Y axes of the enclosed graphs (figures 3 and 4) immediately following emulsifying or following a period of three minutes after emulsifying, respectively.

The heating device allows reaching the desired temperature with precision in a way that the result obtained is regardless of the level of ability and the attention of the user. Indeed, the variable power heating element allows modulating the power supplied over time, reducing it with the increasing temperature of the liquid, thus avoiding overheating as previously described. Furthermore, the thermal sensor allows the milk to reach a defined temperature, ensuring a prompt response in disconnecting the heating element. Indeed, the latter, despite managing to efficiently modulate the power supplied as a function of the temperature of the milk, may respond slowly in reducing/stopping the power supplied at the time of reaching the optimal emulsifying temperature, due to the thermal inertia of the components wherein it is mounted, which, instead allow for an optimal heating stage.

In other words, thanks to the provision of a variable power heating element for heating the milk, and to a sensor able to promptly interrupt such heating upon reaching the optimal temperature, it is possible to rapidly bring the milk in the container to the optimal temperature of 70°C, without burning, and promptly interrupt the electrical supply when such temperature is reached for carrying out the emulsifying. Indeed, the prompt response of the device allows reaching and maintaining the optimal temperature for emulsifying, with precision.

In other words, according to a first aspect, the presence of a variable power heating element allows avoiding the above mentioned drawbacks though keeping down the heating time. Particularly, the use of a thermal diffuser, preferably an aluminium disk between the heating element and the container bottom, contributes towards distributing the heat over a broad surface, so as to improve its transmission with the consequent increase in thermal yield. Such advantage is further enhanced by the presence of conductive paste both between the heating element and the thermal diffuser and between the thermal diffuser and the container bottom. Such conductive paste indeed allows reducing any loss of contact between the various surfaces. That contributes towards optimising heating up to the optimum temperature range without overly extending the times.

Finally, according to a further aspect, the safety of not exceeding such optimum temperature range is ensured by the presence of the thermal sensor, preferably in direct contact with the container bottom, which promptly interrupts the power supplied by the heating element.

Besides the above, it may be advantageously foreseen that the disconnection of the heating element be intimated by a signal, for example acoustic or luminous, so as to allow proceeding to the subsequent manual mechanical emulsifying stage.

A further advantage of the device according to the invention resides in the unusual structural simplicity of the same, which allows its production at very limited cost.

It is clear that variations and/or additions to that described and illustrated above may be foreseen.

Alternatively to as represented in the enclosed figures, the heating element may be differently positioned, for example so as to heat the side walls of the container. Furthermore, it could be provided inside the container in such a way as to be isolated from the contents.

The thermal diffuser could have different shapes, preferably favouring shapes which allow increasing the contact surface with the container. According to one possible embodiment the thermal diffuser is integrally fixed to the heating element.

Also the closing element 32 may have different shape or dimensions, for example extending along the side wall of the container in the case where the heating element faces onto such area of the container.

## Claims

1. A device for heating liquids (10), particularly milk, comprising a container (12) for the liquid to be heated operatively associated with heating means,
wherein said heating means comprise a heating element (18) delivering variable power over time as a function of the temperature reached by the liquid,
said heating element (18) being adapted to reducing the power supplied over time with the increasing temperature of the liquid,
wherein said heating element (18) is positioned so as to heat the bottom (14) of said container (12),
wherein
a thermal diffuser (20) is further provided, fitted between said heating element (18) and the container (12) in order to distribute the heat generated by the heating element (18),
and a thermal sensor (26) is further provided, operatively connected with said heating element (18) in order to disconnect it upon reaching a pre-determined temperature, **characterised in that** said thermal sensor (26) is in contact with said container through an aperture (28) in the thermal diffuser (20).

2. The heating device according to claim 1, wherein said thermal diffuser (20) is fitted between said heating element (18) and the bottom (14) of said container (12) in order to distribute the heat generated by the heating element (18).

3. The heating device according to claim 2, wherein said thermal diffuser (20) is made in the shape of a small plate or disk in contact with said bottom (14) of the container (12).

4. The heating device according to one of the preceding claims, wherein said thermal diffuser (20) is made of aluminium.

5. The heating device according to one of the preceding claims, wherein said thermal sensor (26) is adapted to measuring the temperature of the bottom (14) of said container (12).

6. The heating device according to one of the preceding claims, wherein said heating element (18), said thermal diffuser (20) and said thermal sensor (26), are mounted bundled together on the bottom (14) of the container (12).

7. The heating device according to claim 6, wherein an arm (30) is provided for the fixing of said heating element (18), of said thermal diffuser (20) and said thermal sensor (26) to the bottom (14) of the container (12).

8. The heating device according to one of the preceding claims, wherein a closing element (32) is further provided, adapted to housing said heating element (18).

9. The heating device according to claim 8, wherein said closing element (32) is adapted to being mounted externally to the bottom (14) of said container (12).

10. The heating device according to claim 9, wherein said closing element (32) is adapted to supporting the container (12).

11. The heating device according to one of the claims 8 to 10, wherein said closing element (32) is adapted to housing an electrical connecter (34) for supplying said heating element (18).

12. The heating device according to one of the claims 6 to 7, wherein a closing element (32) is further provided, adapted to housing said thermal diffuser (20), said thermal sensor (26), said heating element (18) and an electrical connecter (34) fitted between said closing element (32) and the bottom (14) of the container (12) .

13. The heating device according to one of the preceding claims, wherein a piston is additionally provided, adapted to be fitted into the container (12) in order to emulsify the liquid, particularly the milk, with air.

14. The heating device according to one of the claims 1 to 4, wherein a layer of conductive paste is interposed between the heating element (18) and the thermal diffuser (20).

15. The heating device according to one of the claims 1 to 4, wherein a layer of conductive paste is interposed between the thermal diffuser (20) and the bottom (14) of the container.

## Patentansprüche

1. Vorrichtung zum Erhitzen (10) von Flüssigkeiten, im Besonderen Milch, einen Behälter (12) für die zu erhitzende Flüssigkeit umfassend, der betriebsfähig mit Heizmitteln verbunden ist,
wobei die Heizmittel ein Heizelement (18) umfassen, das über die Zeit variable Stromleistung als Funktion der Temperatur liefert, die die Flüssigkeit erreicht,
wobei das Heizelement (18) angepasst ist, um den zugeführten Strom im Laufe der Zeit mit steigender Temperatur der Flüssigkeit zu senken,
wobei das Heizelement (18) angeordnet ist, um den Boden (14) des Behälters (12) zu erhitzen,
wobei
weiterhin ein Thermodiffusionselement (20) vorgesehen ist, das zwischen dem Heizelement (18) und dem Behälter (12) angebracht ist, um die von dem Heizelement (18) erzeugte Wärme zu verteilen,
und weiterhin ein Wärmesensor (26) vorgesehen ist, der betriebsfähig mit dem Heizelement (18) verbunden ist, um es abzutrennen, wenn eine bestimmte Temperatur erreicht wird, **dadurch gekennzeichnet, dass** der Wärmesensor (26) mit dem Behälter durch eine Öffnung (28) im Thermodiffusionselement (20) in Kontakt steht.

2. Erhitzungsvorrichtung gemäß Anspruch 1, wobei das Thefmodiffusionselement (20) zwischen dem Heizelement (18) und dem Boden (14) des Behälters (12) angebracht ist, um die von dem Heizelement (18) erzeugte Wärme zu verteilen.

3. Erhitzungsvorrichtung gemäß Anspruch 2, wobei das Thermodiffusionselement (20) die Form einer kleinen Platte oder Scheibe aufweist, die sich im Kontakt mit dem Boden (14) des Behälters (12) befindet.

4. Erhitzungsvorrichtung gemäß einem der vorhergehenden Ansprüche, wobei das Thermodiffusionselment (20) aus Aluminium hergestellt ist.

5. Erhitzungsvorrichtung gemäß einem der vorhergehenden Ansprüche, wobei der Thermosensor (26) zum Messen der Temperatur des Bodens (14) des Behälters (12) ausgebildet ist.

6. Erhitzungsvorrichtung gemäß einem der vorhergehenden Ansprüche, wobei das Heizelement (18), das Thermodiffusionselement (20) und der Thermosensor (26) zusammen am Boden (14) des Behälters (12) angebracht sind.

7. Erhitzungsvorrichtung gemäß Anspruch 6, wobei ein Ausleger (30) für die Befestigung des Heizelements (18), des Thermodiffusionselements (20) und des Thermosensors (26) am Boden (14) des Behälters (12) vorgesehen ist.

8. Erhitzungsvorrichtung gemäß einem der vorhergehenden Ansprüche, wobei ein Abschlusselement (32) weiterhin vorgesehen und an das Gehäuse des Heizelements (18) angepasst ist.

9. Erhitzungsvorrichtung gemäß Anspruch 8, wobei das Abschlusselement (32) ausgebildet ist, um außen am Boden (14) des Behälters (12) angebracht zu werden.

10. Erhitzungsvorrichtung gemäß Anspruch 9, wobei das Abschlusselement (32) ausgebildet ist, um den Behälter (12) zu halten.

11. Erhitzungsvorrichtung gemäß einem der Ansprüche 8 bis 10, wobei das Abscblusselement (32) ausgebildet ist, um einen elektrischen Anschluss (34) zum Betreiben des Heizelements (18) aufzunehmen.

12. Erhitzungsvorrichtung gemäß einem der Ansprüche 6 bis 7, wobei weiterhin ein Abschlusselement (32) vorgesehen ist, das ausgebildet ist, um das Thermodiffusionselement (20), den Thermosensor (26), das Heizelement (18) und einen elektrischen Anschluss (34) aufzunehmen, die zwischen dem Abschluselement (32) und dem Boden (14) des Behälters (12) angebracht sind.

13. Erhitzungsgerät gemäß einem der vorhergehenden Ansprüche, wobei zusätzlich ein Kolben vorgesehen ist, der ausgebildet ist, um in dem Behälter (12) angebracht zu werden, um die Flüssigkeit, im Besonderen Milch, mit Luft zu emulgieren.

14. Erhitzungsvorrichtung gemäß einem der Ansprüche 1 bis 4, wobei eine Schicht Leitpaste zwischen dem Heizelement (18) und dem Thermodiffusionselement (20) eingefügt ist.

15. Erhitzungsvorrichtung gemäß einem der Ansprüche 1 bis 4, wobei eine Schicht Leitpaste zwischen dem Thermodiffusionselement (20) und dem Boden (14) des Behälters eingefügt ist.

## Revendications

1. Dispositif pour le chauffage de liquide (10), en particulier du lait, comportant un réservoir (12) pour le liquide devant être chauffé associé de manière opérationnelle à des moyens de chauffage,
dans lequel lesdits moyens de chauffage comportent un élément de chauffage (18) délivrant une puissance variable dans le temps en fonction de la température atteinte par le liquide,
ledit élément de chauffage (18) étant prévu pour réduire la puissance délivrée dans le temps avec la température du liquide qui augmente,
dans lequel ledit élément de chauffage (18) est positionné de façon à chauffer le fond (14) dudit réservoir (12),
dans lequel un diffuseur thermique (20) est en outre prévu, monté entre ledit élément de chauffage (18) et le réservoir (12) afin de répartir la chaleur générée par l'élément de chauffage (18),
et un capteur thermique (26) est en outre prévu, relié de manière opérationnelle au dit élément de chauffage (18) afin de le déconnecter en atteignant une température prédéterminée, **caractérisé en ce que** ledit capteur thermique (26) est en contact avec ledit réservoir à travers une ouverture (28) dans le diffuseur thermique (20).

2. Dispositif de chauffage selon la revendication 1, dans lequel ledit diffuseur thermique (20) est monté entre ledit élément de chauffage (18) et le fond (14) dudit réservoir (12) afin de répartir la chaleur générée par l'élément de chauffage (18).

3. Dispositif de chauffage selon la revendication 2, dans lequel ledit diffuseur thermique (20) est réalisé sous la forme d'une petite plaque ou d'un disque en contact avec ledit fond (14) du réservoir (12).

4. Dispositif de chauffage selon l'une des revendications précédentes, dans lequel ledit diffuseur thermique (20) est fabriqué en aluminium.

5. Dispositif de chauffage selon l'une des revendications précédentes, dans lequel ledit capteur thermique (26) est prévu pour mesurer la température du fond (14) dudit réservoir (12).

6. Dispositif de chauffage selon l'une des revendications précédentes, dans lequel ledit élément de chauffage (18), ledit diffuseur thermique (20) et ledit capteur thermique (26) sont montés en étant regroupés sur le fond (14) du réservoir (12).

7. Dispositif de chauffage selon la revendication 6, dans lequel un bras (30) est prévu pour la fixation dudit élément de chauffage (18) dudit diffuseur thermique (20) et dudit capteur thermique (26) sur le fond (14) du réservoir (12).

8. Dispositif de chauffage selon l'une des revendications précédentes, dans lequel un élément de fermeture (32) est en outre prévu, prévu pour renfermer ledit élément de chauffage (18).

9. Dispositif de chauffage selon la revendication 8, dans lequel ledit élément de fermeture (32) est prévu pour être monté à l'extérieur du fond (14) dudit réservoir (12).

10. Dispositif de chauffage selon la revendication 9, dans lequel ledit élément de fermeture (32) est prévu pour supporter le réservoir (12).

11. Dispositif de chauffage selon l'une des revendications 8 à 10, dans lequel ledit élément de fermeture (32) est prévu pour renfermer un connecteur électrique (34) destiné à alimenter ledit élément de chauffage (18).

12. Dispositif de chauffage selon l'une des revendications 6 à 7, dans lequel est en outre prévu un élément de fermeture (32), prévu pour renfermer ledit diffuseur thermique (20), ledit capteur thermique (26), ledit élément de chauffage (18) et un connecteur électrique (34) monté entre ledit élément de fermeture (32) et le fond (14) du réservoir (12).

13. Dispositif de chauffage selon l'une des revendications précédentes, dans lequel est prévu de manière additionnelle un piston, prévu pour être monté dans le réservoir (12) afin d'émulsionner le liquide, en particulier le lait, avec de l'air.

14. Dispositif de chauffage selon l'une des revendications 1 à 4, dans lequel une couche de pâte conductrice est interposée entre l'élément de chauffage (18) et le diffuseur thermique (20).

15. Dispositif de chauffage selon l'une des revendications 1 à 4, dans lequel une couche de pâte conductrice est interposée entre le diffuseur thermique (20) et le fond (14) du réservoir.
